# EUROPEAN PATENT SPECIFICATION

(11) **EP 4 158 449 B1**
(45) Date of publication and mention of the grant of the patent: **04.03.2026**
(21) Application number: 21726943.0
(22) Date of filing: 26.05.2021
(51) Int. Cl.: G06F 3/01, G06T 19/00

(54) **SYSTEM, METHOD, DEVICE AND COMPUTER PROGRAM PRODUCT FOR CONNECTING USERS TO A PERSISTENT AR ENVIRONMENT**
SYSTEM, VERFAHREN, VORRICHTUNG UND COMPUTERPROGRAMMPRODUKT ZUM VERBINDEN VON BENUTZERN MIT EINER PERSISTENTEN UMGEBUNG FÜR ERWEITERTE REALITÄT
SYSTÈME, PROCÉDÉ ET PRODUIT PROGRAMME INFORMATIQUE PERMETTANT DE CONNECTER LES UTILISATEURS À UN ENVIRONNEMENT DE RA PERSISTANT

(30) Priority: 26.05.2020 EP 20176578
(43) Date of publication of application: 05.04.2023
(73) Proprietor: Inter IKEA Systems B.V., 2616 LN Delft (NL)
(72) Inventor: ENTHED, Martin, 305 72 Steninge (SE)
(74) Representative: Ström & Gulliksson AB
(86) International application number: PCT/EP2021/064026
(87) International publication number: WO 2021/239799

(56) References cited:
- US-A1- 2017 345 167
- US-A1- 2019 340 836

## Description

### Technical field of the invention

The present disclosure relates to the field of persistent augmented reality, AR, and in particular it relates to a system for connecting users to a persistent AR environment. The disclosure also relates to method for connecting users to a persistent AR environment, a server comprising circuitry configured to carry out the method and a computer program product adapted to carry out the method.

### Background

In AR approaches, virtual anchor points are used to let multiple devices tap the cloud to share virtual objects within a real-world scene. Recently, some of these virtual anchor points have started to implement persistence, wherein changes to the virtual objects are saved between sessions. Persistence is beneficial in that several users may more easily collaborate in the AR environment. However, a downside of persistence is that some contribution may be unwanted.

This may be resolved by using different instances of the persistent AR environment, each instance being independent of the other. This allows for different user groups to make changes independently of each other, however, the different user groups need to be created and managed. There presently does not exist a simple and intuitive way for users to connect into groups with a separate instance of the persistent AR environment.

Therefore, there is room for improvements in the field of connecting users in persistent AR.

US 2017/345167 A1 and US 2019/340836 A1 are prior art examples of mixed-reality environments.

### Summary of the invention

In view of the above, it is thus an object of the present invention to overcome or mitigate at least some of the problems discussed above. In particular, it is an object of the present disclosure to provide a system for connecting users to a persistent AR environment in a simple and intuitive manner. Further and/or alternative objects of the present invention will be clear for a reader of this disclosure.

According to a first aspect of the invention, there is provided a system for connecting users to a persistent AR environment, the persistent AR environment comprising an anchor point for defining a coordinate system of the persistent AR environment. The system comprises: a server managing the persistent AR environment; and a first and second device connected to the server and configured for displaying the persistent AR environment, each device being configured to transmit to the server data indicating a position and angular orientation of the device compared to the anchor point; wherein the server is configured to detect whether the first and second device are oriented towards each other and if so, to sync the persistent AR environments of the first and second device with each other. to connect to a same instance of the persistent AR environment by one of the following:
- connecting the second device to an instance of the AR environment that the first device is already connected to,
- connecting the first device to an instance of the AR environment that the second device is already connected to, and
- connecting the first and second devices both to a new same instance of the AR environment.

By the term "persistent AR environment" should, in the context of present specification, be understood as an AR environment that lasts over an extended period of time and potentially over a plurality of sessions, regardless of whether or not a specific session has ended. For example, virtual objects, being connected to and managed by the anchor point, remain in the same location in which they were previously positioned in the real world space. The persistent AR environment is managed by a server that is in connection with a memory for storing the state of the AR environment between sessions. Possible use cases include leaving virtual notes or objects at specific places in the AR environment that remain for later.

By the term "anchor point" should, in the context of present specification, be understood as a virtual reference point within the persistent AR environment. The anchor point defines a coordinate system that is shared with all users and thereby allows different users to experience the same AR environment.

By the term "managing the persistent AR environment" should, in the context of present specification, be understood as storing and updating the persistent AR environment as it changes and potentially keeping track of users of the persistent AR environment and transmitting data related to the persistent AR environment to the users. This comprises storing virtual models and their position in the real-world space and serving visual data that allows the users to experience the virtual models in their corresponding position in the real-world space.

By the term "angular orientation" should, in the context of present specification, be understood as a direction of a device. The angular orientation of each device may be calculated in reference to the anchor point, which may or may not need to be converted to the coordinate system defined by the anchor point. The angular orientation may be directed towards e.g. the front or top of the device, a camera or antenna of the device or some other suitable device-dependent direction. The device may be directed towards more than one direction, thereby allowing for connecting to several devices at once. The position and angular orientation of a device may also be referred to as a pose of the device.

By the term "sync" should, in the context of present specification, be understood as each device will display the same AR environment and any modification made on one device will show up on the other. In other words, by syncing the the persistent AR environments of the first and second device, the first and second devices will be connected to a same instance of the persistent AR environment and thus modifications on the AR environment made by either of the two devices will be shown on the both devices. Moreover, communication between the two devices in the AR environment may be possible after syncing.

According to an embodiment, the detection of whether the first and second device are oriented towards each other comprises checking, by the server, if the first device has an angular orientation directed towards the position of the second device and vice versa.

Checking if the first device has an angular orientation directed towards the position of the second device and vice versa is beneficial in that it is a simple and accurate way to detect whether the first and second device are oriented towards each other.

According to an embodiment, the detection of whether the first and second device are oriented towards each other further comprises measuring how close a line with the angular orientation of the first device starting from the position of the first device comes to the position of the second device and vice versa; and wherein the server is further configured to only sync the persistent AR environments of the first and second device with each other if the respective lines are closer to the respective device than an aligning threshold.

Measuring how close a line with the angular orientation of the first device starting from the position of the first device comes to the position of the second device and vice versa is beneficial in that it is a simple and accurate way to detect whether the first and second device are oriented towards each other. Only syncing the persistent AR environments of the first and second device with each other if the respective lines are closer to the respective device than an aligning threshold is beneficial in that a threshold allows for a variable margin for error and makes it easier for users to connect with each other. A suitable aligning threshold may in one embodiment correspond to a few degrees. In other embodiments, the aligning threshold may correspond to as much as 10 degrees or as little as <2 degrees, depending on the use case.

According to an embodiment, the aligning threshold is dependent on the number of devices connected to the server, such that a higher number of devices lowers the aligning threshold.

The aligning threshold being dependent on the number of devices connected to the server is beneficial in that a higher number of devices will increase the possibility for false positives (i.e. leading to unintentional synching of AR environment), such that a lower, and thereby stricter, threshold may reduce the possibility for false positives as a counter-measure.

According to an embodiment, the detection of whether the first and second device are oriented towards each other comprises checking for how long the devices are oriented towards each other; and wherein the server is further configured to only sync the persistent AR environments of the first and second device with each other if the devices have been oriented towards each other for longer than a time threshold.

A time threshold is beneficial in that it reduces the possibility for false positives and may be around 1-3 seconds.

According to an embodiment, the time threshold is user-dependent.

A user-dependent time threshold is beneficial in that a user may have more trouble keeping a device steady than another user, for instance due to a disability. The user-dependent threshold may be a setting specific to a device or user or automatically adjusted based on user history, such that a user having a history of turning away their device just before the time threshold is reached may automatically have their time threshold lowered.

According to an embodiment, if the server determines that the first and second device are oriented towards each other, the server is further configured to transmit a verification to the first and second device and only sync the persistent AR environments of the first and second device with each other if the verifications have been approved by the first and second device.

A verification is beneficial in that it reduces the downsides of false positive connections, thereby possibly allowing for looser thresholds for determining that the first and second device are oriented towards each other. However, verifications may become annoying if the thresholds are made too loose.

According to an embodiment, the system further comprises a third device connected to the server and configured for displaying the persistent AR environment, the third device being configured to transmit to the server data indicating a position and angular orientation of the device compared to the anchor point; wherein if the persistent AR environments of the first and second device are synched, the server is configured to detect whether either of the first and second device is oriented towards the third device and vice versa and if so, to sync the persistent AR environments of the first, second and third device with each other.

Syncing the persistent AR environments of the first, second and third device with each other based only on if either of the first and second device is oriented towards the third device and vice versa is beneficial in that it is a simple and intuitive way for creating groups of devices with more than two devices. The teachings of this embodiment may extend to sync further devices such as a fourth and/or fifth device in a similar manner.

According to a second aspect there is provided a method for connecting users to a persistent AR environment managed by a server, the persistent AR environment comprising an anchor point for defining a coordinate system of the persistent AR environment. The method comprises the following steps performed by the server: receiving data indicating a position and angular orientation compared to the anchor point of a first and second device connected to the server; detecting whether the first and second device are oriented towards each other; and if the first and second device are oriented towards each other, syncing the persistent AR environments of the first and second device with each other. to connect to the same instance of the persistent AR environment by one of the following:
- connecting the second device to an instance of the AR environment that the first device is already connected to,
- connecting the first device to an instance of the AR environment that the second device is already connected to, and
- connecting the first and second devices both to a new same instance of the AR environment.

According to an embodiment, the method further comprises a transmitting step performed by the server, the step comprising transmitting persistent AR environment data to the first and second device.

The transmitting step is beneficial in that it reduces the requirements and processor load of the devices.

According to some embodiments, the detecting step comprises checking if the first device has an angular orientation directed towards the position of the second device and vice versa.

According to some embodiments, the detecting step further comprises measuring how close a line with the angular orientation of the first device starting from the position of the first device comes to the position of the second device and vice versa; wherein the syncing step only occurs if the respective lines are closer to the respective devices than an aligning threshold; and wherein the aligning threshold may be dependent on the number of devices connected to the server, such that a higher number of devices lowers the aligning threshold.

According to some embodiments, the detecting step comprises checking for how long the devices are oriented towards each other; and wherein the syncing step only occurs if the devices have been oriented towards each other for longer than a time threshold, wherein the time threshold may be user-dependent.

According to some embodiments, the method further comprises: receiving data indicating a position and angular orientation compared to the anchor point of a third device connected to the server; wherein if the persistent AR environments of the first and second device are synced with each other, detecting whether either of the first and second device is oriented towards the third device and vice versa; and if so, syncing the persistent AR environments of the first, second and third device with each other.

According to a third aspect there is provided a server implementing the method of the second aspect.

According to a fourth aspect there is provided a computer program product comprising a non-transitory computer-readable storage medium with instructions adapted to carry out the method of the second aspect when executed by a device having processing capabilities.

The second, third and fourth aspect may generally have the same features and advantages as the first aspect.

Generally, all terms used in this disclosure are to be interpreted according to their ordinary meaning in the technical field, unless explicitly defined otherwise herein. All references to the word "comprising" does not exclude other elements or steps, and the indefinite articles "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic illustration of a system for connecting users to a persistent augmented reality, AR, environment according to an embodiment;
Fig. 2 is a schematic illustration of the system for connecting users to a persistent AR environment according to an embodiment;
Fig. 3 is an illustration of a real-world implementation of the system for connecting users to a persistent AR environment according to an embodiment;
Figs. 4a-b are illustrations of an AR environment according to an embodiment; and
Fig. 5 is a schematic flowchart of a method for connecting users to a persistent AR environment according to an embodiment.

### Detailed Description

The present invention will now be described more fully hereinafter with reference to the accompanying drawings, in which currently preferred embodiments of the invention are shown. This invention may, showever, be embodied in many different forms and should not be construed as limited to the embodiments set forth herein; rather, these embodiments are provided for thoroughness and completeness, and fully convey the scope of the invention to the skilled person.

In the following, a system 10 will be described for connecting users to a persistent augmented reality, AR, environment. In short, the system 10 comprises a server 20 managing the AR environment and a plurality of devices 31, 32 for displaying the AR environment.

The following disclosure will focus on an embodiment where the persistent AR environment is in a furniture store environment, where users of the devices 31, 32 may augment the different furniture for sale to different colors or textures, or put the furniture into a virtual scene to better envision the furniture at home. It should be noted that even though the described embodiments will focus on a furniture store for the sake of clarity, the inventive concepts set out in the attached claims may be implemented in any number of ways, e.g. collaborative projects at an office, real-world AR games or city planning.

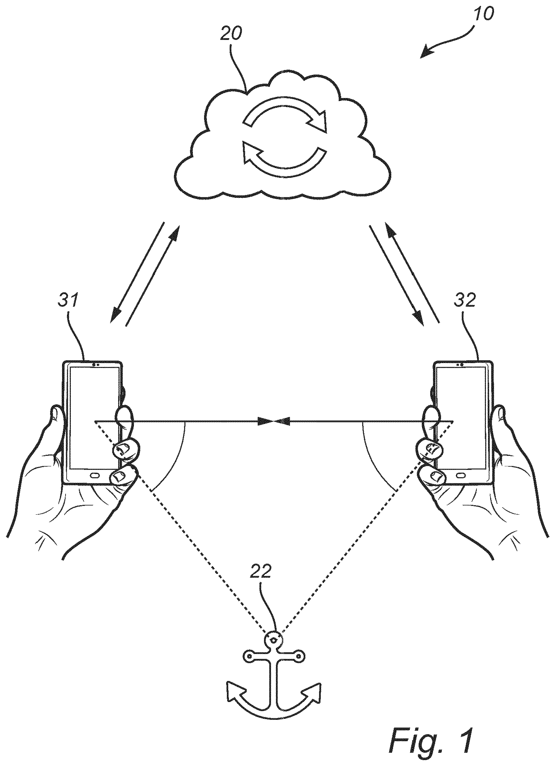

Fig. 1 discloses a schematic illustration of a system 10 for connecting users to a persistent AR environment according to an embodiment. The persistent AR environment comprises an anchor point 22 for defining a coordinate system of the persistent AR environment. The anchor point 22 defines a coordinate system that is shared with all users and thereby allows different users to experience the same AR environment. The anchor point 22 ensures that virtual objects in the AR environment appear to stay at the same position and orientation in space, thus helping to maintain the illusion of virtual objects placed in the real world. While an anchor is used to illustrate the anchor point 22, this is merely an illustration and the anchor point 22 is completely virtual without any physical shape.

The system 10 comprises a server 20 managing the persistent AR environment. The server 20 may be cloud-based using e.g. distributed computing or running on a local processor as is known in the art. Managing the persistent AR environment comprises storing and updating the persistent AR environment as it changes and potentially keeping track of users of the persistent AR environment and transmitting data related to the persistent AR environment to the users. This comprises storing virtual models and their position in the real-world space, e.g. using the coordinate system of the anchor point 22, and serving visual data that allows the users to experience the virtual models in their corresponding position in the real-world space.

It should be noted a same server may manage a plurality of instances of the persistent AR environment. The present disclosure provides a low complexity and intuitive way of connecting a plurality of users to a same instance of the AR environment.

The system 10 further comprises a first and second device 31, 32 configured for displaying the persistent AR environment. The devices 31, 32 may be smartphones, headsets or any other suitable device for displaying an AR environment. Devices 31, 32 of different types may be connected to the different instances of the persistent AR environment and connect to each other for e.g. syncing the persistent AR environment, to connect to a same instance. The devices 31, 32 may run specific software to process the persistent AR environment, such as an app.

The devices 31, 32 are connected to the server 20 using wired or wireless communication. The devices 31, 32 are configured to transmit to the server 20 data indicating a position and angular orientation of the device compared to the anchor point 22, i.e. the pose of the devices. A pose of an object or a device represents the device/object's position and orientation in world space. The data may be coordinates in the geographic coordinate system of the devices 31, 32 to be re-calibrated by the server 20, may be the coordinates in the coordinate system of the anchor point 22 calculated by the device 31, 32 or may be raw GPS and gyro data to be processed by the server 20.

The server 20 is configured to detect whether the first and second device 31, 32 are oriented towards each other. This may comprise checking, by the server 20, if the first device 31 has an angular orientation directed towards the position of the second device 32 and vice versa. The angular orientation of each device 31, 32 may be calculated in reference to the anchor point 22, which may or may not be converted to the coordinate system defined by the anchor point 22. The angular orientation may be directed towards e.g. the front or top of the device 31, 32, a camera or antenna of the device 31, 32 or some other suitable device-dependent direction.

The device 31, 32 may in one embodiment be directed towards more than one direction e.g. the directions of a back camera and top of a smartphone. By orienting a first device 31 with more than one direction such that at least two directions are oriented towards the position of a second and third device 32, 33, respectively, each being oriented towards the first device 31, the first device 31 may connect to several devices 32, 33 at once.

The detection of whether the first and second device 31, 32 are oriented towards each other may be superseded by the server 20 checking if the first and second device 31, 32 are connected to the same or different anchor points 22 and that the anchor point(s) 22 are represented in the same physical space as the devices 31, 32. This is to ensure that the angular orientation of each device 31, 32, which may be calculated in reference to the anchor point 22, has the same reference and that the first and second device 31, 32 are in the same general location and/or persistent AR environment.

The detection of whether the first and second device 31, 32 are oriented towards each other may be superseded by the server 20 checking if the first and second device 31, 32 are connected to the same or different anchor points 22 and that the anchor point(s) 22 are represented in the same physical space as the devices 31, 32. This is to ensure that the angular orientation of each device 31, 32, which may be calculated in reference to the anchor point 22, has the same reference and that the first and second device 31, 32 are in the same general location and/or persistent AR environment. In case the devices 31, 32 are not connected to the same anchor point 22, the detection step S130 may not be performed. On the other hand, if the devices 31, 32 are connected to the same anchor point 22, the detection step S130 is performed.

The detection of whether the first and second device 31, 32 are oriented towards each other may further comprise measuring how close a line with the angular orientation of the first device 31 starting from the position of the first device 31 comes to the position of the second device 32 and vice versa. This provides a simple and accurate measurement of how close the devices 31, 32 are to being oriented towards each other.

As an alternative, the detection of whether the first and second device 31, 32 are oriented towards each other may comprise aligning a virtual target shown in the AR environment displayed by the device 31, 32 with another device 31, 32, e.g. using software such as image recognition to detect a match.

In an embodiment where the devices 31, 32 run specific software to process the persistent AR environment, such as an app, the server 20 may further require that the software is running to determine that the first and second device 31, 32 are oriented towards each other. The server 20 may further require that a setting or mode of the software, e.g. a toggle for being available for grouping, is active to determine that the first and second device 31, 32 are oriented towards each other.

If the first and second device 31, 32 are determined by the server 20 to be oriented towards each other, the server 20 is further configured to sync the persistent AR environments of the first and second device 31, 32 with each other. By syncing the AR environments, each device 31, 32 will display the same AR environment and any modification made on one device 31, 32 will show up on the other. This allows the devices 31, 32 to sync without exchange of any personal information of the users of the devices 31, 32 in a simple and intuitive way. The synching may involve connecting the second device to the instance of the AR environment that the first device is already connected to or vice versa. The choice of which device that connects to which device AR environment may be predetermined or be the result of input from one or both of the devices. In other embodiments, the first and second devices are both connected to a new (same) instance of the AR environment.

Syncing the persistent AR environments of the first and second device 31, 32 with each other may further involve allowing the two devices 31, 32 to communicate with each other, e.g. automatically creating a voice over IP-chat, or using a text-based chat functionality.

The server 20 may further be configured to only sync the persistent AR environments of the first and second device 31, 32 with each other if the respective lines, with the angular orientation of one device starting from the position of that device, are closer to the position of the other device than an aligning threshold.

The aligning threshold is beneficial in that a threshold allows for a variable margin for error and makes it easier for users to connect with each other. A suitable aligning threshold may correspond to a few degrees of geometric coordinates, such as 2-10 or 3-5 degrees, though the threshold may be calculated in any coordinate system. A balance should be found between making it easy enough to sync devices 31, 32 that want to be synced without frustration and making it hard enough to not accidentally sync devices that do not want to be synced, i.e. false positive results.

The aligning threshold may be dependent on the number of devices 31, 32 connected to the server 20, such that a higher number of devices 31, 32 lowers the aligning threshold and vice versa.

The aligning threshold being dependent on the number of devices 31, 32 connected to the server 20 is beneficial in that a higher number of devices 31, 32 will increase the possibility for false positives, such that a lower, and thereby stricter, threshold may reduce the possibility for false positives as a counter-measure.

The aligning threshold may further be dependent on the area density of devices 31, 32 connected to the server 20, i.e. the number of devices 31, 32 connected to the server 20 within a predefined vicinity of the devices 31, 32.

The aligning threshold may further be dependent on the distance between the first and second device 31, 32, such that a higher distance decreases the aligning threshold and vice versa.

The aligning threshold being dependent on the distance between the first and second device 31, 32 is beneficial in that the risk of connecting devices 31, 32 by mistake may be increased if they are farther apart, since at a larger distance, an aligning threshold of e.g. 5 degrees cover a larger part of the scene compared to the same threshold on a shorter distance.

The detection of whether the first and second device 31, 32 are oriented towards each other may comprise checking for how long the devices 31, 32 are oriented towards each other. In these embodiments, the server 20 is further configured to only sync the persistent AR environments of the first and second device 31, 32 with each other if the devices 31, 32 have been oriented towards each other for longer than a time threshold.

A time threshold is beneficial in that it reduces the possibility for false positives and may be around 3 seconds, such as 1 second, 2 seconds, 4 seconds or 5 seconds.

A combination of an aligning threshold and time threshold has synergistic effects in that the aligning threshold lowers the aligning requirements and thereby makes it easier for users that want to connect with each other to sync their devices 31, 32 at the cost of increasing the possibility for false positives; while the time threshold reduces the possibility for false positives.

The time threshold may be user-dependent. A user-dependent time threshold is beneficial in that a user may have more trouble keeping a device 31, 32 steady than another user, for instance due to a disability or the type of device 31, 32 used. The user-dependent threshold may be a setting specific to a device 31, 32 or user or automatically adjusted based on user history, such that a user having a history of turning away their device just before the time threshold is reached may automatically have their time threshold lowered.

The aligning threshold may be user-dependent in a similar manner.

According to some embodiments, the detection of whether the first and second device 31, 32 are oriented towards each other may be followed by a check by the devices 31, 32 that a person/human is visible through a lens of the devices 31, 32. This embodiment may further ensure that the following synching S150 of the AR environments of the first and second devices 31, 32 is only done in case the devices 31, 32 operated by a human. In case one or both of the devices 31, 32 are not detecting a human operator of the other device 31, 32, this information may be transmitted to the server which then do not perform the synching step S150.

The server 20 may further be configured to transmit a verification to the first and second device 31, 32 if the server 20 determines that the first and second device 31, 32 are oriented towards each other and only sync the persistent AR environments of the first and second device 31, 32 with each other if the verifications have been approved by the first and second device 31, 32.

A verification is beneficial in that it reduces the downsides of false positive connections, thereby possibly allowing for looser thresholds for determining that the first and second device 31, 32 are oriented towards each other. However, verifications may become annoying if the thresholds are made too loose. A balance of the threshold[s] may therefore still be necessary.

The verification may be a pop-up window or gesture-controlled. The verification may automatically be approved if the devices 31, 32 continue to be oriented towards each other for a secondary time threshold and may automatically be rejected/aborted if the devices 31, 32 stop being oriented towards each other.

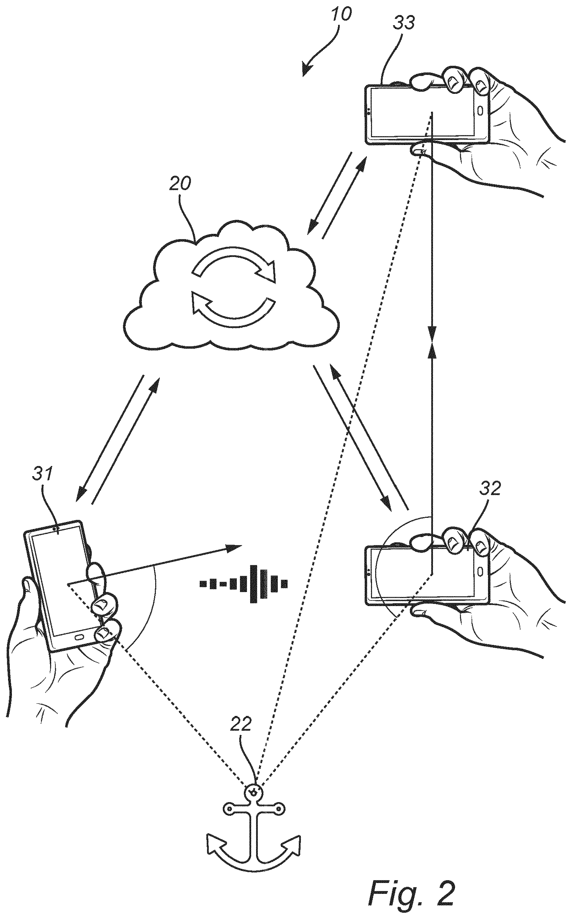

Fig. 2 discloses a schematic illustration of a system 10 for connecting users to a persistent AR environment according to an embodiment. In this embodiment, the first and second device 31, 32 have previously synced and are connected with each other.

The system 10 further comprises a third device 33 connected to the server 20 and configured for displaying the persistent AR environment, the third device 33 being configured to transmit to the server 20 data indicating a position and angular orientation of the device compared to the anchor point 22. The third device 33 is analogous to the first and second device 31, 32.

The server 20 is configured to detect whether either of the first and second device 31, 32 is oriented towards the third device 33 and vice versa. This detection functions as previously described in relation to Fig. 1. The third device 33 only needs to be oriented towards one of the synced devices 31, 32. This simplifies the creation of a group.

If the third device 33 is oriented towards one of the synced devices 31, 32 and that device is oriented towards the third device 33, the server 20 is configured to sync the persistent AR environments of the first, second and third device 31, 32, 33 with each other.

This is a simple and intuitive way to create groups of connected users with three or more users, without any need of sharing private information. In a corresponding manner, a fourth device 34 may connect to the group of the first, second and third device 31, 32, 33 and so on.

A similar embodiment concerns two groups of users, each having two synced devices. A first group comprises the first and second device 31, 32 and a second group comprises the third and fourth device 33, 34. If one of the devices 31, 32 of the first group is oriented towards one of the devices 33, 34 of the second group and vice versa, the server 20 is configured to sync the persistent AR environments of the first and second group with each other, i.e. connecting the first, second, third and fourth device 31, 32, 33, 34 with each other. This is an efficient way to create large groups of connected devices.

The determination of whether the devices 31, 32, 33 are oriented towards each other may have be affected by whether or not one of the devices 33 is trying to connect to an already existing group of synced devices 31, 32.

For example, either or both of the thresholds mentioned with regards to Fig. 1 may be different. It may be beneficial to change the thresholds so that it is harder to connect to an existing group to avoid people spying on each other.

This may further be user-dependent, e.g. so that a user frequently connecting to large groups may change their settings. Furthermore, the server 20 may use machine learning algorithms to identify grouping patterns. For example, if a user frequently creates a group with three other specific users, this grouping may automatically become easier or even automatically suggested to the user.

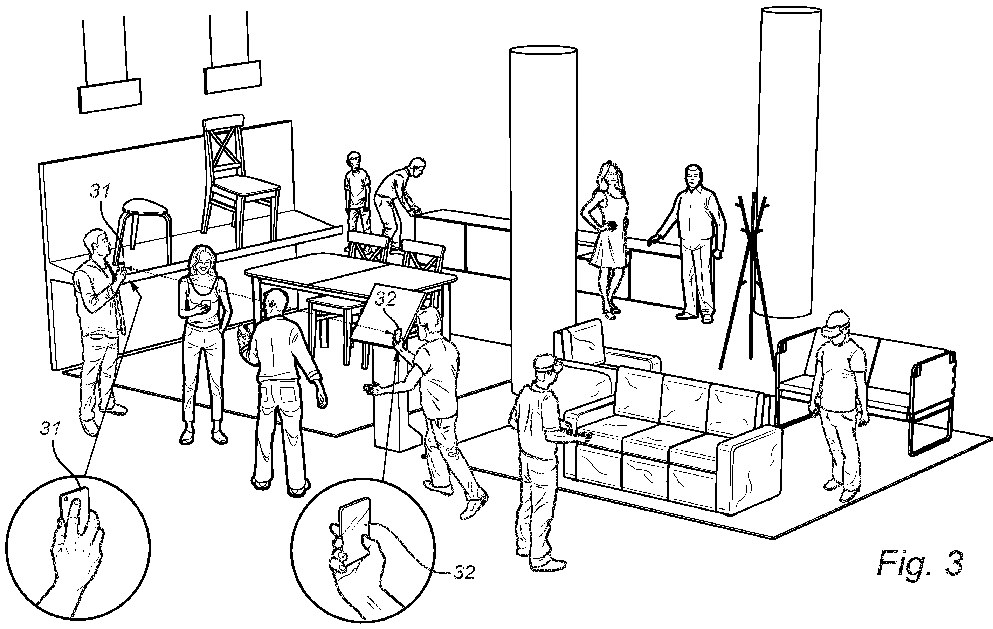

Fig. 3 is an illustration of a real-world implementation of the system 10 for connecting users to a persistent AR environment according to an embodiment. The real-world implementation is here shown as a furniture store.

Two users on the left side of Fig. 3 are trying to connect to the persistent AR environment. They each have a device 31, 32 that is connected to the server 20 and is configured for displaying the persistent AR environment. In this case, the devices 31, 32 are smartphones. They are pointing their smartphones 31, 32 towards each other, such that their persistent AR environments are synced.

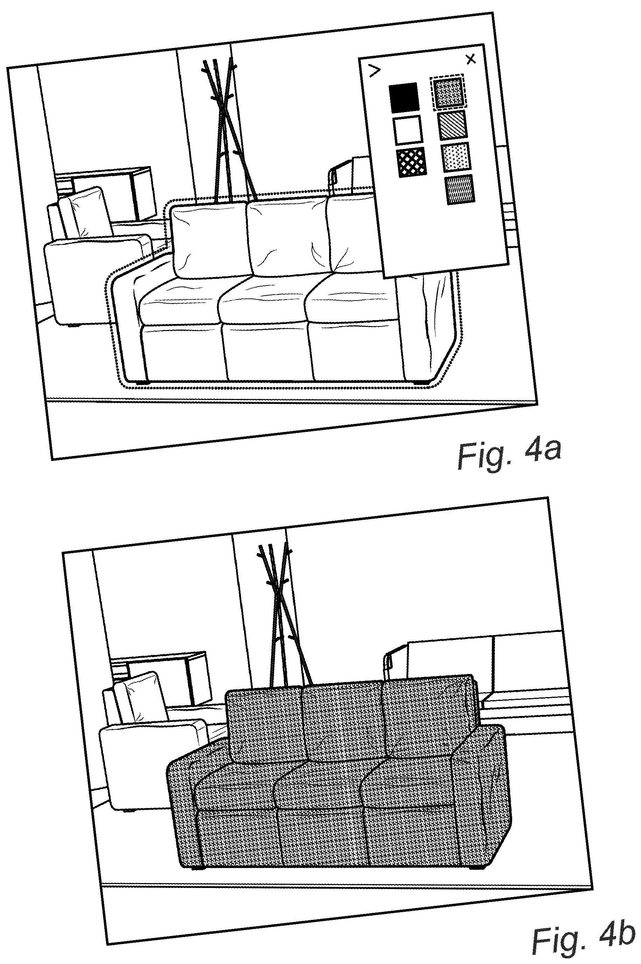

Two other users to the right side of Fig. 3 are already synced and are viewing a couch in their synced persistent AR environment. Their view of the couch is shown in Figs. 4a-b.

Figs. 4a-b show illustrations of an AR environment according to an embodiment. More specifically, Fig. 4a shows the AR view of the couch of Fig. 3. There is a pop-up menu associated with the couch that allows the users to virtually change its upholstery.

Fig. 4b shows the couch of Fig. 4a with a virtually changed upholstery. This change applies to all users of the same AR environment and no other users. Thereby, if one of the synced users changes the upholstery of the couch, the other synced user will see this change, while all other non-synced users will not.

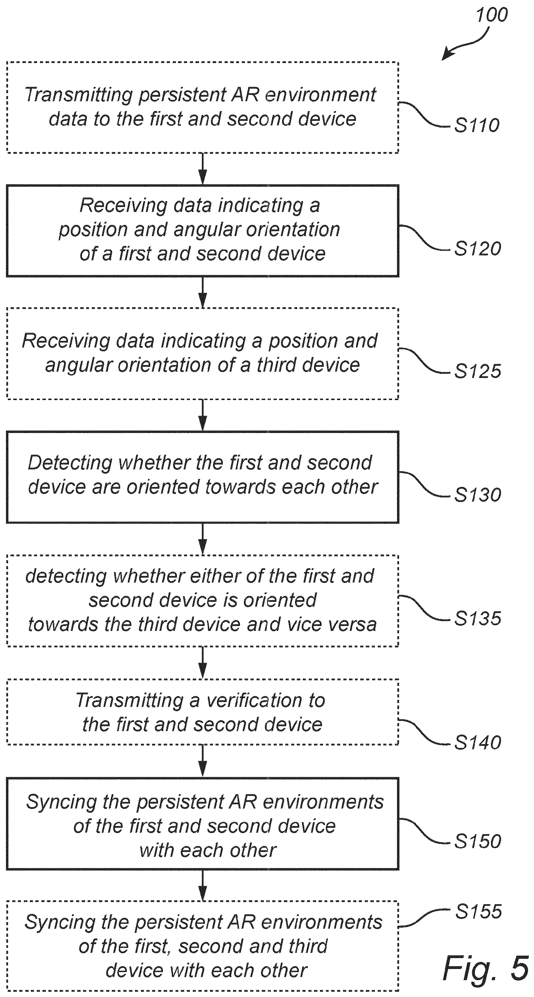

Fig. 5 is a flowchart of a method 100 for connecting users to a persistent AR environment according to an embodiment. This method 100 is computer implemented on any device with circuits having processing capability, such as a server 20 and/or a computer with a CPU. The method 100 is described as a number of steps in a specific sequence, however it should be clear from the following disclosure that the sequence described is merely one possible embodiment. Further, some steps may be skipped, occur simultaneously and/or be perfomed using different units or circuits.

The method 100 may comprise a transmitting step S110 comprising transmitting persistent AR environment data to the first and second device 31, 32.

The method 100 comprises a receiving step S120 comprising receiving data indicating a position and angular orientation compared to the anchor point 22 of a first and second device 31, 32 connected to the server 20.

The method 100 comprises a detecting step S130 comprising detecting whether the first and second device 31, 32 are oriented towards each other.

The detecting step S130 may comprise checking if the first device 31 has an angular orientation directed towards the position of the second device 32 and vice versa.

The detecting step S130 may comprise checking if the first and second device 31, 32 are connected to the same or different anchor points 22 and that the anchor point(s) 22 are represented in the same physical space as the devices 31, 32. This is to ensure that the angular orientation of each device 31, 32, which may be calculated in reference to the anchor point 22, has the same reference and that the first and second device 31, 32 are in the same general location and/or persistent AR environment.

The detecting step S130 may further comprise measuring how close a line with the angular orientation of the first device 31 starting from the position of the first device 31 comes to the position of the second device 32 and vice versa. In these embodiments, the detecting step S130 further comprises checking whether the respective lines are closer to the respective devices 31, 32 than an aligning threshold, which may impact further steps, such as a syncing step S150.

The aligning threshold may depend on the number of devices connected to the server 20, such that a higher number of devices lowers the aligning threshold.

The detecting step S130 may further comprise measuring how long the devices 31, 32 are oriented towards each other. In these embodiments, the detecting step S130 further comprises checking whether the devices 31, 32 have been oriented towards each other for longer than a time threshold, which may impact further steps, such as a syncing step S150.

The time threshold may be user-dependent.

The method 100 may comprise a verification step S140, wherein if the detecting step S130 results in determining that the first and second device 31, 32 are oriented towards each other, the verification step S140 comprises transmitting a verification to the first and second device 31, 32.

The method 100 comprises a syncing step S150 comprising syncing the persistent AR environments of the first and second device 31, 32 with each other.

The syncing step S150 is affected by a number of factors dependent on the previous steps of the method 100, primarily the detecting step S130 and possibly the verification step S140.

The syncing step S150 may only occur if the detecting step 130 results in the first and second device 31, 32 being determined to be oriented towards each other. This determination may be dependent on an aligning and/or time threshold as previously mentioned.

The syncing step S150 may further only occur if the verifications of the verification step 140 have been approved by the first and second device 31, 32.

The method 100 may further comprise extra steps relating to further devices, such as a third device 33 as in Fig. 2. In these embodiments, the method 100 comprises an additional receiving step S125 comprising receiving data indicating a position and angular orientation compared to the anchor point 22 of a third device 33 connected to the server 20. This step S125 is similar to the regular receiving step S120 and may be improved in similar manners.

In these embodiments, the method 100 further comprises an additional detecting step S135 comprising detecting whether either of the first and second device 31, 32 is oriented towards the third device 33 and vice versa. This step S135 is similar to the regular detecting step S130 and may be improved in similar manners. However, the additional detecting step S135 further comprises checking if the persistent AR environments of the first and second device 31, 32 are synced with each other.

If both the conditions of; the first and second device 31, 32 being synced with each other; and either of the first and second device 31, 32 being oriented towards the third device 33 and vice versa; are fulfilled, an additional syncing step S155 may occur. This step S155 comprises syncing the persistent AR environments of the first, second and third device 31, 32, 33 with each other.

The method 100 may be implemented using a computer program product comprising a computer-readable storage medium with instructions adapted to carry out the method 100 when executed by a device having processing capabilities. The computer-readable storage medium may be transitory (i.e. communication media) or non-transitory.

It should be realized that while the preceding description has focused on embodiments where AR environments are synced between devices 31, 32, the system 10 and/or method 100 of the present disclosure may have other uses for sharing content between devices 31, 32. These embodiments may have no AR, such as sharing a shopping list or opening a chatting window with a stranger.

In such an embodiment, the method 100 may comprise the following steps performed by a server 20: receiving S120 data indicating a position and angular orientation compared to a reference point of a first and second device 31, 32 connected to the server 20; detecting S130 whether the first and second device 31, 32 are oriented towards each other; and if the first and second device 31, 32 are oriented towards each other, sharing content between the first and second device 31, 32 such as e.g. sharing text, images, or allowing chatting. In these embodiments, any of the above discussed features may be added to improve security around when to share content between the devices. For example, sharing may only be performed in case the devices is operated by a human, or sharing between more than two devices may be allowed according to the disclosed methods above. The reference point of the two devices may be achieved by any known means such as using a GPS system and/or using e.g. an inertial navigation system (INS) of the devices. INS is the use of motion sensors (e.g. accelerometers) and rotation sensors (e.g. gyroscopes) to continuously calculate the position, the orientation, and possibly the velocity (direction and speed of movement) of a moving object.

The person skilled in the art realizes that the present invention by no means is limited to the preferred embodiments described above. On the contrary, many modifications and variations are possible within the scope of the appended claims.

For example, when a device connects to the server, the position of the anchor point may be transmitted to the device. Alternatively, data indicating a position of the device and angular orientation of a front, top, camera or antenna of the device may be transmitted to the server, which the server will interpret in relation to the anchor point. For example, data indicating a position of the device may be a GPS coordinate, which the server may compare to the GPS coordinate of the anchor point.

Additionally, variations to the disclosed embodiments can be understood and effected by the skilled person in practicing the claimed invention, from a study of the drawings, the disclosure, and the appended claims. The mere fact that certain measures are recited in mutually different dependent claims does not indicate that a combination of these measured cannot be used to advantage.

The systems and methods disclosed hereinabove may be implemented as software, firmware, hardware or a combination thereof. In a hardware implementation, the division of tasks between functional units referred to in the above description does not necessarily correspond to the division into physical units; to the contrary, one physical component may have multiple functionalities, and one task may be carried out by several physical components in cooperation. Certain components or all components may be implemented as software executed by a digital signal processor or microprocessor, or be implemented as hardware or as an application-specific integrated circuit. Such software may be distributed on computer readable media, which may comprise computer storage media [or non-transitory media] and communication media [or transitory media]. As is well known to a person skilled in the art, the term computer storage media includes both volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks, DVD, or other optical disk storage, magnetic cassettes, magnetic tape, magnetic disk storage or other magnetic storage devices, or any other medium which can be used to store the desired information, and which can be accessed by a computer. Further, it is well known to the skilled person that communication media typically embodies computer readable instructions, data structures, program modules or other data in a modulated data signal such as a carrier wave or other transport mechanism and includes any information delivery media.

## Claims

1. A system for connecting users to a same instance of a persistent augmented reality, AR, environment, the persistent AR environment comprising an anchor point (22) for defining a coordinate system of the persistent AR environment, the system (10) comprising:
a server (20) managing the persistent AR environment; and **characterised by**
a first and second device (31, 32) connected to the server (20) and configured for displaying different instances of the persistent AR environment, each device (31, 32) being configured to transmit to the server (20) data indicating a position of the device and angular orientation of a front, top, camera or antenna of the device;
wherein the server (20) is configured to detect whether a front, top, camera or antenna of the first and second device (31, 32) are oriented towards each other and if so, to sync the persistent AR environments of the first and second device (31, 32) with each other to connect to a same instance of the persistent AR environment by one of the following:
• connecting the second device (32) to an instance of the AR environment that the first device (31) is already connected to,
• connecting the first device (31) to an instance of the AR environment that the second device (32) is already connected to, and
• connecting the first and second devices (31, 32) both to a new same instance of the AR environment.

2. The system according to claim 1, wherein the detection of whether a front, top, camera or antenna of the first and second device (31, 32) are oriented towards each other comprises checking, by the server (20), if a front, top, camera or antenna of the first device (31) has an angular orientation directed towards the position of the second device (32) and vice versa.

3. The system according to claim 2, wherein the detection of whether a front, top, camera or antenna of the first and second device (31, 32) are oriented towards each other further comprises measuring how close a line with the angular orientation of a front, top, camera or antenna of the first device (31) starting from the position of the first device (31) comes to the position of the second device (32) and vice versa; and
wherein the server (20) is further configured to only sync the persistent AR environments of the first and second device (31, 32) with each other if the respective lines are closer to the respective device (31, 32) than an aligning threshold.

4. The system according to claim 3, wherein the system further comprises at least a third device (33) connected to the server (20) and configured for displaying an instance of the persistent AR environment; and
wherein the aligning threshold is dependent on the number of devices connected to the server (20), such that a higher number of devices lowers the aligning threshold.

5. The system according to any one of the previous claims,
wherein the detection of whether a front, top, camera or antenna of the first and second device (31, 32) are oriented towards each other comprises checking for how long the devices (31, 32) are oriented towards each other; and
wherein the server (20) is further configured to only sync the persistent AR environments of the first and second device (31, 32) with each other if a front, top, camera or antenna of the devices (31, 32) have been oriented towards each other for longer than a time threshold.

6. The system according to claim 5, wherein the time threshold is user-dependent.

7. The system according to any one of the previous claims, wherein if the server (20) determines that a front, top, camera or antenna of the first and second device (31, 32) are oriented towards each other, the server (20) is further configured to transmit a verification to the first and second device (31, 32) and only sync the persistent AR environments of the first and second device (31, 32) with each other if the verifications have been approved by the first and second device (31, 32).

8. The system according to any one of the previous claims, further comprising a third device (33) connected to the server (20) and configured for displaying the persistent AR environment, the third device (33) being configured to transmit to the server (20) data indicating a position of the device and angular orientation of a front, top, camera or antenna of the device compared to the anchor point (22);
wherein if the persistent AR environments of the first and second device (31, 32) are synched, the server (20) is configured to detect whether either of a front, top, camera or antenna of the first and second device (31, 32) is oriented towards a front, top, camera or antenna of the third device (33) and vice versa and if so, to sync the persistent AR environments of the first, second and third device (31, 32, 33) with each other.

9. A method for connecting users to a same instance of a persistent AR environment managed by a server (20), the persistent AR environment comprising an anchor point (22) for defining a coordinate system of the persistent AR environment, the method (100)
**characterised in that** the following steps performed by the server (20):
receiving (S120) data indicating a position of a first and second device (31, 32) connected to the server (20) and angular orientation of a front, top, camera or antenna of a first and second device (31, 32) connected to the server (20), wherein the first and second device is connected to different instances of the persistent AR environment;
detecting (S130) whether a front, top, camera or antenna of the first and second device (31, 32) are oriented towards each other; and
if a front, top, camera or antenna of the first and second device (31, 32) are oriented towards each other, syncing (S150) the persistent AR environments of the first and second device (31, 32) with each other to connect to the same instance of the persistent AR environment by one of the following:
• connecting the second device (32) to an instance of the AR environment that the first device (31) is already connected to,
• connecting the first device (31) to an instance of the AR environment that the second device (32) is already connected to, and
• connecting the first and second devices (31, 32) both to a new same instance of the AR environment.

10. The method according to claim 9, further comprising a transmitting step (S110) performed by the server (20), the step (S110) comprising transmitting persistent AR environment data to the first and second device (31, 32).

11. The method according to claim 9 or 10, wherein the detecting step (S130) comprises checking if a front, top, camera or antenna of the first device (31) has an angular orientation directed towards the position of the second device (32) and vice versa.

12. The method according to claim 11, wherein the detecting step (S130) further comprises measuring how close a line with the angular orientation of a front, top, camera or antenna of the first device (31) starting from the position of the first device (31) comes to the position of the second device (32) and vice versa;
wherein the syncing step (S150) only occurs if the respective lines are closer to the respective devices (31, 32) than an aligning threshold; and
wherein the aligning threshold may be dependent on the number of devices connected to the server (20), such that a higher number of devices lowers the aligning threshold.

13. The method according to any one of the claims 9-12, wherein the detecting step (S130) comprises checking for how long a front, top, camera or antenna of the devices (31, 32) are oriented towards each other; and
wherein the syncing step (S150) only occurs if a front, top, camera or antenna of the devices (31, 32) have been oriented towards each other for longer than a time threshold, wherein the time threshold may be user-dependent.

14. A server implementing the method of any one of the claims 9-13.

15. A computer program product comprising a non-transitory computer-readable storage medium with instructions adapted to carry out the method of any one of the claims 9-13 when executed by a device having processing capabilities.

## Patentansprüche

1. System zum Verbinden von Benutzern mit einer selben Instanz einer persistenten erweiterten Realitäts, Augmented Reality, AR,-Umgebung wobei die persistente AR-Umgebung einen Ankerpunkt (22) zum Definieren eines Koordinatensystems der persistenten AR-Umgebung umfasst, wobei das System (10) Folgendes umfasst:
einen Server (20), der die persistente AR-Umgebung verwaltet; und **gekennzeichnet durch**
eine erste und eine zweite Vorrichtung (31, 32), die mit dem Server (20) verbunden und zum Anzeigen verschiedener Instanzen der persistenten AR-Umgebung konfiguriert sind, wobei jede Vorrichtung (31, 32) konfiguriert ist, um Daten an den Server (20) zu übertragen, die eine Position der Vorrichtung und eine Winkelausrichtung einer Vorderseite, Oberseite, Kamera oder Antenne der Vorrichtung angeben;
wobei der Server (20) konfiguriert ist, um zu detektieren, ob eine Vorderseite, Oberseite, Kamera oder Antenne der ersten und zweiten Vorrichtung (31, 32) zueinander ausgerichtet sind, und wenn dem so ist, die persistenten AR-Umgebungen der ersten und zweiten Vorrichtung (31, 32) miteinander zu synchronisieren, um sich mit derselben Instanz der persistenten AR-Umgebung durch eines der Folgenden zu verbinden:
• Verbinden der zweiten Vorrichtung (32) mit einer Instanz der AR-Umgebung, mit der die erste Vorrichtung (31) bereits verbunden ist,
• Verbinden der ersten Vorrichtung (31) mit einer Instanz der AR-Umgebung, mit der die zweite Vorrichtung (32) bereits verbunden ist, und
• die ersten und zweiten Vorrichtungen (31, 32) beide mit einer neuen selben Instanz der AR-Umgebung verbinden.

2. System nach Anspruch 1, wobei die Detektion, ob eine Vorderseite, Oberseite, Kamera oder Antenne der ersten und zweiten Vorrichtung (31, 32) zueinander ausgerichtet sind, ein Prüfen durch den Server (20) umfasst, ob eine Vorderseite, Oberseite, Kamera oder Antenne der ersten Vorrichtung (31) eine Winkelausrichtung aufweist, die auf die Position der zweiten Vorrichtung (32) gerichtet ist, und umgekehrt.

3. System nach Anspruch 2, wobei die Detektion, ob eine Vorderseite, Oberseite, Kamera oder Antenne der ersten und zweiten Vorrichtung (31, 32) zueinander ausgerichtet sind, ferner ein Messen, wie nahe eine Linie mit der Winkelausrichtung einer Vorderseite, Oberseite, Kamera oder Antenne der ersten Vorrichtung (31) ausgehend von der Position der ersten Vorrichtung (31) an die Position der zweiten Vorrichtung (32) kommt, und umgekehrt, umfasst; und
wobei der Server (20) ferner konfiguriert ist, um die persistenten AR-Umgebungen der ersten und zweiten Vorrichtung (31, 32) nur miteinander zu synchronisieren, wenn die jeweiligen Linien näher an der jeweiligen Vorrichtung (31, 32) sind als ein Ausrichtungsschwellwert.

4. System nach Anspruch 3, wobei das System ferner mindestens eine dritte Vorrichtung (33) umfasst, die mit dem Server (20) verbunden und zum Anzeigen einer Instanz der persistenten AR-Umgebung konfiguriert ist; und
wobei der Ausrichtungsschwellwert von der Anzahl der mit dem Server (20) verbundenen Vorrichtungen abhängig ist, so dass eine höhere Anzahl von Vorrichtungen den Ausrichtungsschwellwert senkt.

5. System nach einem der vorhergehenden Ansprüche, wobei die Detektion, ob eine Vorderseite, Oberseite, Kamera oder Antenne der ersten und zweiten Vorrichtung (31, 32) zueinander ausgerichtet sind, ein Prüfen umfasst, wie lange die Vorrichtungen (31, 32) zueinander ausgerichtet sind; und
wobei der Server (20) ferner konfiguriert ist, um die persistenten AR-Umgebungen der ersten und zweiten Vorrichtung (31, 32) nur miteinander zu synchronisieren, wenn eine Vorderseite, Oberseite, Kamera oder Antenne der Vorrichtungen (31, 32) länger als ein Zeitschwellwert zueinander ausgerichtet wurden.

6. System nach Anspruch 5, wobei der Zeitschwellwert benutzerabhängig ist.

7. System nach einem der vorhergehenden Ansprüche, wobei, wenn der Server (20) bestimmt, dass eine Vorderseite, Oberseite, Kamera oder Antenne der ersten und zweiten Vorrichtung (31, 32) zueinander ausgerichtet sind, der Server (20) ferner konfiguriert ist, um eine Verifizierung an die erste und zweite Vorrichtung (31, 32) zu übertragen und die persistenten AR-Umgebungen der ersten und zweiten Vorrichtung (31, 32) nur miteinander zu synchronisieren, wenn die Verifizierungen von der ersten und zweiten Vorrichtung (31, 32) genehmigt wurden.

8. System nach einem der vorhergehenden Ansprüche, ferner umfassend eine dritte Vorrichtung (33), die mit dem Server (20) verbunden und zum Anzeigen der persistenten AR-Umgebung konfiguriert ist, wobei die dritte Vorrichtung (33) konfiguriert ist, um Daten an den Server (20) zu übertragen, die eine Position der Vorrichtung und eine Winkelausrichtung einer Vorderseite, Oberseite, Kamera oder Antenne der Vorrichtung im Vergleich zum Ankerpunkt (22) angeben;
wobei, wenn die persistenten AR-Umgebungen der ersten und zweiten Vorrichtung (31, 32) synchronisiert sind, der Server (20) konfiguriert ist, um zu detektieren, ob entweder eine Vorderseite, Oberseite, Kamera oder Antenne der ersten und zweiten Vorrichtung (31, 32) auf eine Vorderseite, Oberseite, Kamera oder Antenne der dritten Vorrichtung (33) ausgerichtet ist, und umgekehrt, und wenn dem so ist, die persistenten AR-Umgebungen der ersten, zweiten und dritten Vorrichtung (31, 32, 33) miteinander zu synchronisieren.

9. Verfahren zum Verbinden von Benutzern mit einer selben Instanz einer persistenten AR-Umgebung, die von einem Server (20) verwaltet wird, wobei die persistente AR-Umgebung einen Ankerpunkt (22) zum Definieren eines Koordinatensystems der persistenten AR-Umgebung umfasst, wobei das Verfahren (100) **dadurch gekennzeichnet ist, dass** die folgenden Schritte vom Server (20) durchgeführt werden:
Empfangen (S120) von Daten, die eine Position einer ersten und zweiten Vorrichtung (31, 32), die mit dem Server (20) verbunden sind, und eine Winkelausrichtung einer Vorderseite, Oberseite, Kamera oder Antenne einer ersten und zweiten Vorrichtung (31, 32), die mit dem Server (20) verbunden sind, angeben, wobei die erste und zweite Vorrichtung mit verschiedenen Instanzen der persistenten AR-Umgebung verbunden sind;
Detektieren (S130), ob eine Vorderseite, Oberseite, Kamera oder Antenne der ersten und zweiten Vorrichtung (31, 32) zueinander ausgerichtet sind; und
wenn eine Vorderseite, Oberseite, Kamera oder Antenne der ersten und zweiten Vorrichtung (31, 32) zueinander ausgerichtet sind, Synchronisieren (S150) der persistenten AR-Umgebungen der ersten und zweiten Vorrichtung (31, 32) miteinander, um sich mit derselben Instanz der persistenten AR-Umgebung durch eines der Folgenden zu verbinden:
• Verbinden der zweiten Vorrichtung (32) mit einer Instanz der AR-Umgebung, mit der die erste Vorrichtung (31) bereits verbunden ist,
• Verbinden der ersten Vorrichtung (31) mit einer Instanz der AR-Umgebung, mit der die zweite Vorrichtung (32) bereits verbunden ist, und
• die ersten und zweiten Vorrichtungen (31, 32) beide mit einer neuen selben Instanz der AR-Umgebung verbinden.

10. Verfahren nach Anspruch 9, ferner umfassend einen Übertragungsschritt (S110), der vom Server (20) durchgeführt wird, wobei der Schritt (S110) ein Übertragen von persistenten AR-Umgebungsdaten an die erste und zweite Vorrichtung (31, 32) umfasst.

11. Verfahren nach Anspruch 9 oder 10, wobei ein Detektierschritt (S130) das Prüfen umfasst, ob eine Vorderseite, Oberseite, Kamera oder Antenne der ersten Vorrichtung (31) eine Winkelausrichtung aufweist, die auf die Position der zweiten Vorrichtung (32) gerichtet ist, und umgekehrt.

12. Verfahren nach Anspruch 11, wobei der Ermittlungsschritt (S130) ferner ein Messen, wie nahe eine Linie mit der Winkelausrichtung einer Vorderseite, Oberseite, Kamera oder Antenne der ersten Vorrichtung (31) ausgehend von der Position der ersten Vorrichtung (31) an die Position der zweiten Vorrichtung (32) kommt, und umgekehrt, umfasst;
wobei der Synchronisierungsschritt (S150) nur erfolgt, wenn die jeweiligen Linien näher an den jeweiligen Vorrichtungen (31, 32) sind als ein Ausrichtungsschwellwert; und
wobei der Ausrichtungsschwellwert von der Anzahl der mit dem Server (20) verbundenen Vorrichtungen abhängig sein kann, so dass eine höhere Anzahl von Vorrichtungen den Ausrichtungsschwellwert senkt.

13. Verfahren nach einem der Ansprüche 9-12, wobei der Detektierschritt (S130) ein Prüfen umfasst, wie lange eine Vorderseite, Oberseite, Kamera oder Antenne der Vorrichtungen (31, 32) zueinander ausgerichtet sind; und
wobei der Synchronisierungsschritt (S150) nur erfolgt, wenn eine Vorderseite, Oberseite, Kamera oder Antenne der Vorrichtungen (31, 32) länger als ein Zeitschwellwert zueinander ausgerichtet wurden, wobei der Zeitschwellwert benutzerabhängig sein kann.

14. Server, der das Verfahren nach einem der Ansprüche 9-13 implementiert.

15. Computerprogrammprodukt, umfassend ein nicht-transitorisches computerlesbares Speichermedium mit Anweisungen, die dazu ausgelegt sind, das Verfahren nach einem der Ansprüche 9-13 auszuführen, wenn sie von einer Vorrichtung mit Verarbeitungsfähigkeiten ausgeführt werden.

## Revendications

1. Système pour connecter des utilisateurs à une même instance d'un environnement de réalité augmentée, AR, persistant, l'environnement AR persistant comprenant un point d'ancrage (22) pour définir un système de coordonnées de l'environnement AR persistant, le système (10) comprenant :
un serveur (20) gérant l'environnement AR persistant ; et
**caractérisé par**
des premier et deuxième dispositifs (31, 32) connectés au serveur (20) et configurés pour afficher différentes instances de l'environnement AR persistant, chaque dispositif (31, 32) étant configuré pour transmettre au serveur (20) des données indiquant une position du dispositif et une orientation angulaire d'un avant, d'un haut, d'une caméra ou d'une antenne du dispositif ;
dans lequel le serveur (20) est configuré pour détecter si un avant, un haut, une caméra ou une antenne des premier et deuxième dispositifs (31, 32) sont orientés les uns vers les autres et, si tel est le cas, pour synchroniser les environnements AR persistants des premier et deuxième dispositifs (31, 32) l'un avec l'autre pour se connecter à une même instance de l'environnement AR persistant par l'intermédiaire d'une quelconque parmi :
• une connexion du deuxième dispositif (32) à une instance de l'environnement AR à laquelle le premier dispositif (31) est déjà connecté,
• une connexion du premier dispositif (31) à une instance de l'environnement AR à laquelle le deuxième dispositif (32) est déjà connecté, et
• une connexion des premier et deuxième dispositifs (31, 32) à une nouvelle même instance de l'environnement AR.

2. Système selon la revendication 1, dans lequel la détection qu'un avant, qu'un haut, qu'une caméra ou qu'une antenne des premier et deuxième dispositifs (31, 32) soient orientés ou non les uns vers les autres comprend une vérification, par l'intermédiaire du serveur (20), qu'un avant, qu'un haut, qu'une caméra ou qu'une antenne du premier dispositif (31) présente une orientation angulaire dirigée vers la position du deuxième dispositif (32), et vice versa.

3. Système selon la revendication 2, dans lequel la détection qu'un avant, qu'un haut, qu'une caméra ou qu'une antenne des premier et deuxième dispositifs (31, 32) soient orientés ou non les uns vers les autres comprend en outre une mesure de la proximité d'une ligne avec l'orientation angulaire d'un avant, d'un haut, d'une caméra ou d'une antenne du premier dispositif (31) à partir de la position du premier dispositif (31) par rapport à la position du deuxième dispositif (32), et vice versa ; et
dans lequel le serveur (20) est en outre configuré pour synchroniser uniquement les environnements AR persistants des premier et deuxième dispositifs (31, 32) l'un avec l'autre si les lignes respectives sont plus proches du dispositif respectif (31, 32) que d'un seuil d'alignement.

4. Système selon la revendication 3, dans lequel le système comprend en outre au moins un troisième dispositif (33) connecté au serveur (20) et configuré pour afficher une instance de l'environnement AR persistant ; et
dans lequel le seuil d'alignement dépend du nombre de dispositifs connectés au serveur (20), de telle sorte qu'un nombre plus élevé de dispositifs abaisse le seuil d'alignement.

5. Système selon l'une quelconque des revendications précédentes, dans lequel la détection qu'un avant, qu'un haut, qu'une caméra ou qu'une antenne des premier et deuxième dispositifs (31, 32) soient orientés ou non les uns vers les autres comprend une vérification de la durée pendant laquelle les dispositifs (31, 32) sont orientés l'un vers l'autre ; et
dans lequel le serveur (20) est en outre configuré pour synchroniser uniquement les environnements AR persistants des premier et deuxième dispositifs (31, 32) l'un avec l'autre si un avant, un haut, une caméra ou une antenne des dispositifs (31, 32) ont été orientés les uns vers les autres pendant plus longtemps qu'un seuil de temps.

6. Système selon la revendication 5, dans lequel le seuil de temps dépend de l'utilisateur.

7. Système selon l'une quelconque des revendications précédentes, dans lequel si le serveur (20) détermine qu'un avant, qu'un haut, qu'une caméra ou qu'une antenne des premier et deuxième dispositifs (31, 32) sont orientés les uns vers les autres, le serveur (20) est en outre configuré pour transmettre une vérification aux premier et deuxième dispositifs (31, 32) et pour synchroniser uniquement les environnements AR persistants des premier et deuxième dispositifs (31, 32) l'un avec l'autre si les vérifications ont été approuvées par les premier et deuxième dispositifs (31, 32).

8. Système selon l'une quelconque des revendications précédentes, comprenant en outre un troisième dispositif (33) connecté au serveur (20) et configuré pour afficher l'environnement AR persistant, le troisième dispositif (33) étant configuré pour transmettre au serveur (20) des données indiquant une position du dispositif et une orientation angulaire d'un avant, d'un haut, d'une caméra ou d'une antenne du dispositif par rapport au point d'ancrage (22) ;
dans lequel si les environnements AR persistants des premier et deuxième dispositif (31, 32) sont synchronisés, le serveur (20) est configuré pour détecter si un avant, un haut, une caméra ou une antenne des premier et deuxième dispositifs (31, 32) est orienté(e) vers un avant, un haut, une caméra ou une antenne du troisième dispositif (33) et vice versa, et si tel est le cas, pour synchroniser les environnements AR persistants des premier, deuxième et troisième dispositifs (31, 32, 33) les uns avec les autres.

9. Procédé pour connecter des utilisateurs à une même instance d'un environnement AR persistant géré par l'intermédiaire d'un serveur (20), l'environnement AR persistant comprenant un point d'ancrage (22) pour définir un système de coordonnées de l'environnement AR persistant, le procédé (100)
étant **caractérisé par** les étapes suivantes
effectuées par l'intermédiaire du serveur (20) :
recevoir (S120) des données indiquant une position de premier et deuxième dispositifs (31, 32) connectés au serveur (20) et une orientation angulaire d'un avant, d'un haut, d'une caméra ou d'une antenne de premier et deuxième dispositifs (31, 32) connectés au serveur (20), dans lequel les premier et deuxième dispositifs sont connectés à des instances différentes de l'environnement AR persistant ;
détecter (S130) si un avant, un haut, une caméra ou une antenne des premier et deuxième dispositifs (31, 32) sont orientés les uns vers les autres ; et
si un avant, un haut, une caméra ou une antenne du premier et du deuxième dispositif (31, 32) sont orientés les uns vers les autres, synchroniser (S150) les environnements AR persistants des premier et deuxième dispositifs (31, 32) l'un avec l'autre pour se connecter à la même instance de l'environnement AR persistant par l'intermédiaire d'une quelconque parmi :
• une connexion du deuxième dispositif (32) à une instance de l'environnement AR à laquelle le premier dispositif (31) est déjà connecté,
• une connexion du premier dispositif (31) à une instance de l'environnement AR à laquelle le deuxième dispositif (32) est déjà connecté, et
• une connexion des premier et deuxième dispositifs (31, 32) à une nouvelle même instance de l'environnement AR.

10. Procédé selon la revendication 9, comprenant en outre une étape de transmission (S110) effectuée par le serveur (20), l'étape (S110) comprenant la transmission de données d'environnement AR persistant aux premier et deuxième dispositifs (31, 32).

11. Procédé selon la revendication 9 ou 10, dans lequel l'étape de détection (S130) comprend la vérification qu'un avant, qu'un haut, qu'une caméra ou qu'une antenne du premier dispositif (31) présente une orientation angulaire dirigée vers la position du deuxième dispositif (32), et vice versa.

12. Procédé selon la revendication 11, dans lequel l'étape de détection (S130) comprend en outre une mesure de la proximité d'une ligne avec l'orientation angulaire d'un avant, d'un haut, d'une caméra ou d'une antenne du premier dispositif (31) à partir de la position du premier dispositif (31) par rapport à la position du deuxième dispositif (32), et vice versa ;
dans lequel l'étape de synchronisation (S150) ne survient que si les lignes respectives sont plus proches des dispositifs respectifs (31, 32) qu'un seuil d'alignement ; et
dans lequel le seuil d'alignement peut dépendre du nombre de dispositifs connectés au serveur (20), de telle sorte qu'un nombre plus élevé de dispositifs abaisse le seuil d'alignement.

13. Procédé selon l'une quelconque des revendications 9 à 12, dans lequel l'étape de détection (S130) comprend une vérification de la durée pendant laquelle un avant, un haut, une caméra ou une antenne des dispositifs (31, 32) sont orientés les uns vers les autres ; et
dans lequel l'étape de synchronisation (S150) ne survient que si un avant, un haut, une caméra ou une antenne des dispositifs (31, 32) ont été orientés les uns vers les autres pendant plus longtemps qu'un seuil de temps, dans lequel le seuil de temps peut dépendre de l'utilisateur.

14. Serveur mettant en œuvre le procédé selon l'une quelconque des revendications 9 à 13.

15. Produit de programme informatique comprenant un support de stockage non transitoire lisible par ordinateur avec des instructions adaptées pour exécuter le procédé selon l'une quelconque des revendications 9 à 13 lorsqu'elles sont exécutées par un dispositif présentant des capacités de traitement.
